# EUROPÄISCHE PATENTSCHRIFT

(11) **EP 3 114 801 B1**
(45) Veröffentlichungstag und Bekanntmachung des Hinweises auf die Patenterteilung: **08.11.2017**
(21) Anmeldenummer: 15707342.0
(22) Anmeldetag: 27.02.2015
(51) Int. Cl.: H04L 12/40, H04L 12/413, H04L 25/02

(54) **TEILNEHMERSTATION FÜR EIN BUSSYSTEM UND VERFAHREN ZUR REDUZIERUNG VON LEITUNGSGEBUNDENEN EMISSIONEN IN EINEM BUSSYSTEM**
SUBSCRIBER STATION FOR A BUS SYSTEM AND METHOD FOR REDUCING LINE-CONDUCTED EMISSIONS IN A BUS SYSTEM
STATION D'ABONNÉ POUR UN SYSTÈME DE BUS ET PROCÉDÉ DE RÉDUCTION D'ÉMISSIONS LIÉES À UNE LIGNE DANS UN SYSTÈME DE BUS

(30) Priorität: 05.03.2014 DE 102014204048
(43) Veröffentlichungstag der Anmeldung: 11.01.2017
(73) Patentinhaber: Robert Bosch GmbH, 70442 Stuttgart (DE)
(72) Erfinder: HARTWICH, Florian, 72762 Reutlingen (DE); WALKER, Steffen, 72770 Reutlingen (DE); HEHEMANN, Ingo, 49170 Hagen A.T.W (DE)
(86) Internationale Anmeldenummer: PCT/EP2015/054125
(87) Internationale Veröffentlichungsnummer: WO 2015/132146

(56) Entgegenhaltungen:
- WO-A1-2012/038472
- DE-A1-102011 007 766
- US-A1- 2010 201 399

## Beschreibung

Die vorliegende Erfindung betrifft eine Teilnehmerstation für ein Bussystem und ein Verfahren zur Reduzierung von leitungsgebundenen Emissionen in einem Bussystem, bei welchen eine Steuerung der Eigenschaften einer Sende-/Empfangseinrichtung einer Teilnehmerstation eines Bussystems außerhalb der Arbitrierung stattfindet.

### Stand der Technik

Für die Kommunikation zwischen zwei oder mehr Busteilnehmern, wie beispielsweise Sensor(en), Steuergerät(en), usw., hat das CAN-Bussystem eine weite Verbreitung gefunden. Beim CAN-Bussystem werden Nachrichten mittels des CAN-Protokolls übertragen, wie es in der CAN-Spezifikation in der ISO11898 beschrieben ist. Im Zuge der wachsenden Zahl intelligenter Sensoren und der stärkeren Vernetzung der Steuergeräte im Fahrzeug wächst die Anzahl der Teilnehmerstationen am CAN-Bus und das Datenaufkommen auf dem CAN-Bus immer weiter an.

DE10 000 305 A1 beschreibt das CAN (Controller Area Network) sowie eine als TTCAN (Time Trigger CAN = zeit-getriggertes CAN) bezeichnete Erweiterung des CAN. Das beim CAN verwendete Medienzugriffssteuerverfahren beruht auf einer bitweisen Arbitrierung. Bei CAN wird die bitweise Arbitrierung anhand eines führenden Identifiers innerhalb der über den Bus zu übertragenden Nachricht vorgenommen.

Wie bereits in der DE 10 2012 200 997 beschrieben, können bei der bitweisen Arbitrierung mehrere Teilnehmerstationen gleichzeitig Daten auf das Bussystem senden, ohne dass hierdurch die Datenübertragung gestört wird.

DE 10 2010 041368 beschreibt ein Verfahren zur Datenübertragung zwischen Teilnehmern eines Bussystems, bei dem über einen ersten Kanal zu übertragende erste Daten und über einen zweiten Kanal zu übertragende zweite Daten über eine gemeinsame Signalleitung übertragen werden und hierzu einem Datensignal ein Modulationssignal überlagert wird.

In jüngster Zeit wurden Techniken vorgeschlagen, wie beispielsweise CAN-FD, bei welchem Nachrichten entsprechend Spezifikation "CAN with Flexible Data-Rate, Specification Version 1.0" (Quelle http://www.semiconductors.bosch.de) übertragen werden, usw. Bei solchen Techniken wird die maximal mögliche Datenrate durch Einsatz einer höheren Taktung im Bereich der Datenfelder über einen Wert von 1 MBit/s hinaus gesteigert.

DE 10 2011 007766 A1 beschreibt ein Verfahren zur Datenübertragung zwischen Teilnehmern eines Bussystems, bei dem innerhalb der ausgetauschten Nachrichten die Codierung der Bits in einem ersten Bereich der Nachrichten gemäß CAN erfolgt und in einem zweiten Bereich der Nachrichten nach einem abweichenden Verfahren erfolgt.

Die Bustopologie spielt für die Signalintegrität und damit schnelle Datenübertragung eine große Rolle. Insbesondere ist problematisch, dass an jeder Abzweigung der Datenleitungen für eine Teilnehmerstation eines CAN-Bussystems Reflexionen bei der Datenübertragung entstehen. Diese Reflexionen überlagern sich mit den gesendeten Signalen und stören den Empfang der Empfänger. Je größer die Reflexionen sind, umso langsamer muss die Datenrate gewählt werden, um das Signal noch zuverlässig übertragen zu können.

Die wichtigsten Anforderungen an eine CAN-Hochgeschwindigkeit-Sende-/Empfangseinrichtung, die auch CAN-Highspeed-Transceiver (CAN-HS-Transceiver) genannt wird, sind, abgesehen von Einhaltung der funktionalen Parameter, die Erfüllung der Anforderungen in Bezug auf:
- Emission,
- Direct Power Injection (DPI), was ein Verfahren zur Störfestigkeitsmessung im Bereich der elektromagnetischen Verträglichkeit (EMV) ist, und
- Elektrostatische Entladung (ESD = Electrostatic Discharge).

Mit der Einführung von CAN-FD durch einige CAN- Anwender werden nun Bitraten von größer 1 MBit pro Sekunde (1 Mbps), 2Mbps, 4Mbps und gegebenenfalls höher verwendet. Problematisch hieran ist, dass trotz Erhöhung der Datenrate für das CAN-Bussystem die Hersteller die gleichen Werte für die Emissionsgrenzwerte fordern, wie bei der Datenrate für ein herkömmliches CAN-Bussystem, das beispielsweise gemäß "Hardware Requirement. for CAN Interfaces 1.3 aufgebaut ist. Derzeit können diese Grenzwerte mit CAN-FD nicht eingehalten werden, wenn die höheren Bitraten verwendet werden. Ursache für die Verletzung der Grenzwerte ist bei gleichbleibender Sende-/Empfangseinrichtung (Transceiver) die erhöhte Energiedichte, da im CAN-Signal pro Zeit mehr Flanken getrieben werden.

Eine weitere Anforderung, welche mit dem Stand der Technik nicht erfüllt werden kann, ist die Forderung der CAN-Anwender, die Emissionsgrenzen auch bei asymmetrischen Widerständen im Auskoppelnetzwerk an den beiden Busleitungen einzuhalten, die +/-10 Ohm betragen. Diese Forderung soll die unterschiedlichen Leitungswiderstände der beiden Busleitungen im realen Fahrzeug nachbilden.

### Offenbarung der Erfindung

Daher ist es Aufgabe der vorliegenden Erfindung, eine Teilnehmerstation für ein Bussystem und ein Verfahren bereitzustellen, welche die zuvor genannten Probleme lösen. Insbesondere sollen eine Teilnehmerstation für ein Bussystem und ein Verfahren bereitgestellt werden, bei welchen im Normalbetrieb einer CAN- Sende-/Empfangseinrichtung (eines CAN-Transceivers) die Emission auf ein Minimum reduziert wird, so dass die Emissionsgrenzen der CAN-Anwender auch für CAN-HS oder CAN-FD eingehalten werden.

Die Aufgabe wird durch eine Teilnehmerstation für ein Bussystem mit den Merkmalen des Anspruchs 1 gelöst. Die Teilnehmerstation umfasst eine Sende-/Empfangseinrichtung zum Senden oder Empfangen einer Nachricht von mindestens einer weiteren Teilnehmerstation des Bussystems über das Bussystem, bei welchem Bussystem zumindest zeitweise ein exklusiver, kollisionsfreier Zugriff einer Teilnehmerstation auf einen Bus des Bussystems gewährleistet ist, wobei die Sende-/Empfangseinrichtung eine Emissionssteuereinrichtung zur Steuerung der Eigenschaften der Sende-/Empfangseinrichtung zur Reduktion von leitungsgebundenen Emissionen in dem Bussystem aufweist, und wobei die Sende-/Empfangseinrichtung zudem zum Ein- oder Ausschalten der Emissionssteuereinrichtung abhängig von der Arbitrierungsphase und des Datenbereichs der Nachricht ausgestaltet ist.

Mit der Teilnehmerstation wird die Einhaltung der derzeit vorgegebenen Emissionsgrenzwerte für CAN auch bei CAN-FD-Bitraten ermöglicht. Zudem können bei Messung mit asymmetrischen Widerständen in einem Auskoppelnetzwerk des Bussystems Emissionsgrenzwerte eingehalten werden.

Ein weiterer Vorteil besteht darin, dass eine automatische Anpassung an Busleitungsgegebenheiten im Feld möglich ist.

Somit ist die Teilnehmerstation auch für den Einsatz in höher getakteten Systemen, wie beispielsweise CAN-FD, usw., geeignet. Die zuvor beschriebene Teilnehmerstation eignet sich zum Einsatz von CAN-FD auch bei Anwendungen, bei denen bisher keine weitere Erhöhung der Datenrate wegen der vorgegebenen Emissionsgrenzwerte möglich war.
Darüber hinaus kann mit der zuvor beschriebenen Teilnehmerstation die maximal übertragbare Datenrate bei CAN-FD erhöht werden.

Ein weiterer Vorteil besteht darin, dass mit der zuvor beschriebenen Teilnehmerstation eine Erhöhung der Datenrate durch das Senden von Nachrichten analog zu anderen Datenübertragungsprotokollen, wie beispielsweise Ethernet, usw., wesentlich einfacher realisierbar ist.

Die Teilnehmerstation kann prinzipiell bei allen Zweidraht-Schnittstellen angewendet werden, welche durch eine Kommunikationsphase gekennzeichnet sind, in welcher sichergestellt ist, dass nur ein Teilnehmer sendet.

Vorteilhafte weitere Ausgestaltungen der Teilnehmerstation sind in den abhängigen Ansprüchen beschrieben.

Die Teilnehmerstation umfasst vorzugsweise zudem eine Kommunikationssteuereinrichtung zur Steuerung der Kommunikation im Bussystem, wobei die Kommunikationssteuereinrichtung oder die Sende-/Empfangseinrichtung eine Erfassungseinrichtung zur Erfassung eines Datenbereichs aufweist.

Möglicherweise weist die Sende-/Empfangseinrichtung eine Erfassungseinrichtung auf, die derart ausgestaltet ist, dass sie den Datenbereich aufgrund eines Erfassens eines BRS-Bits am Ende einer Arbitrierungsphase erkennt.

Gemäß einer weiteren Variante ist die Sende-/Empfangseinrichtung ausgestaltet, den Datenbereich aufgrund eines Schaltsignals von der Kommunikationssteuereinrichtung zu erkennen. Hierbei kann die Kommunikationssteuereinrichtung eine Erfassungseinrichtung aufweisen, die derart ausgestaltet ist, dass sie nach Erkennen des Datenbereichs ein Schaltsignal über einen Anschluss an die Sende-/Empfangseinrichtung ausgibt.

Gemäß noch einer weiteren Variante weist die Sende-/Empfangseinrichtung eine Erfassungseinrichtung auf, die derart ausgestaltet ist, dass sie den Datenbereich aufgrund einer Überwachung eines Sendesignals erkennt. Hierbei kann die Erfassungseinrichtung einen Zähler zum Zählen von fallenden oder steigenden Flanken des Sendesignals aufweisen. Es ist auch möglich, dass die Erfassungseinrichtung zudem ein Zeitglied zum Zurücksetzen des Zählers aufweist.

Die zuvor beschriebene Teilnehmerstation kann Teil eines Bussystems sein, das einen Bus, und mindestens zwei Teilnehmerstationen aufweist, welche über den Bus derart miteinander verbunden sind, dass sie miteinander kommunizieren können. Hierbei ist mindestens eine der mindestens zwei Teilnehmerstationen eine zuvor beschriebene Teilnehmerstation.

Die zuvor genannte Aufgabe wird zudem durch ein Verfahren zur Reduzierung von leitungsgebundenen Emissionen in einem Bussystem mit den Merkmalen des Anspruchs 10 gelöst. Das Verfahren umfasst die Schritte: Senden, mit einer Sende-/Empfangseinrichtung, einer Nachricht von mindestens einer weiteren Teilnehmerstation des Bussystems über das Bussystem, bei welchem Bussystem zumindest zeitweise ein exklusiver, kollisionsfreier Zugriff einer Teilnehmerstation auf einen Bus des Bussystems gewährleistet ist, Steuern der Eigenschaften der Sende-/Empfangseinrichtung mit einer Emissionssteuereinrichtung der Sende-/Empfangseinrichtung, um leitungsgebundene Emission des Bussystems zu reduzieren, und Ein- oder Ausschalten der Emissionssteuereinrichtung abhängig von der Arbitrierungsphase und des Datenbereichs der Nachricht.

Das Verfahren bietet dieselben Vorteile, wie sie zuvor in Bezug auf die Teilnehmerstation genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 einen Sollspannungsverlauf eines Bussignals über der Zeit im Bussystem gemäß dem ersten Ausführungsbeispiel;
Fig. 3 ein elektrisches Schaltbild eines Auskoppelnetzwerks zur Messung von leitungsgebundenen Emissionen bei dem Bussystem gemäß dem ersten Ausführungsbeispiel;
Fig. 4 ein Blockschaltbild einer Sende-/Empfangseinrichtung einer Teilnehmerstation des Bussystems gemäß dem ersten Ausführungsbeispiel;
Fig. 5 ein Schaubild zur Veranschaulichung des Aufbaus einer Nachricht, die von einer Teilnehmerstation des Bussystems gemäß dem ersten Ausführungsbeispiel gesendet wird;
Fig. 6 ein Blockschaltbild einer Sende-/Empfangseinrichtung einer Teilnehmerstation des Bussystems gemäß einem zweiten Ausführungsbeispiel; und
Fig. 7 ein Blockschaltbild einer Sende-/Empfangseinrichtung einer Teilnehmerstation des Bussystems gemäß einem dritten Ausführungsbeispiel.

In den Figuren sind gleiche oder funktionsgleiche Elemente, sofern nichts anderes angegeben ist, mit denselben Bezugszeichen versehen.

### Beschreibung der Ausführungsbeispiele

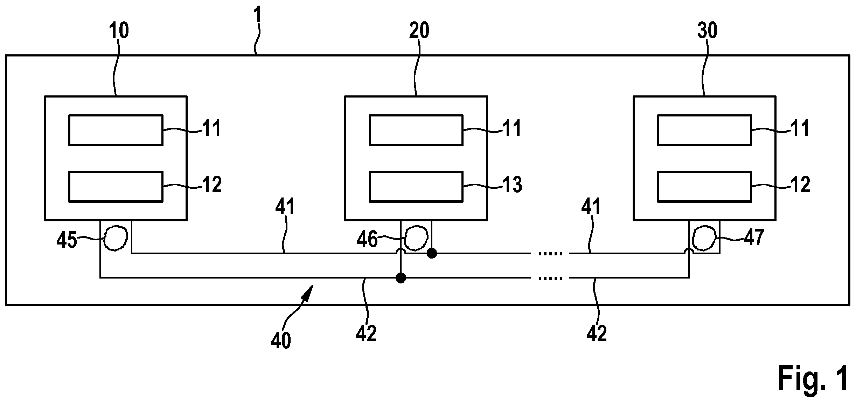

Fig. 1 zeigt ein Bussystem 1, das beispielsweise ein CAN-Bussystem, ein CAN-FD-Bussystem, usw., sein kann. Das Bussystem 1 kann in einem Fahrzeug, insbesondere einem Kraftfahrzeug, einem Flugzeug, usw., oder im Krankenhaus usw. Verwendung finden.

In Fig. 1 hat das Bussystem 1 eine Vielzahl von Teilnehmerstationen 10, 20, 30, die jeweils an einen Bus 40 mit einer ersten Busader 41 und einer zweiten Busader 42 angeschlossen sind. Die Busadern 41, 42 können auch CAN_H und CAN_L genannt werden und dienen zur Einkopplung der dominanten Pegel im Sendezustand. Über den Bus 40 können Nachrichten 45, 46, 47 in der Form von Signalen zwischen den einzelnen Teilnehmerstationen 10, 20, 30 übertragen werden. Die Teilnehmerstationen 10, 20, 30 können beispielsweise Steuergeräte oder Anzeigevorrichtungen eines Kraftfahrzeugs sein.

Wie in Fig. 1 gezeigt, haben die Teilnehmerstationen 10, 30 jeweils eine Kommunikationssteuereinrichtung 11 und eine Sende-/Empfangseinrichtung 12. Die Teilnehmerstation 20 hat dagegen eine Kommunikationssteuereinrichtung 11 und eine Sende-/Empfangseinrichtung 13. Die Sende-/Empfangseinrichtungen 12 der Teilnehmerstationen 10, 30 und die Sende-/Empfangseinrichtung 13 der Teilnehmerstation 20 sind jeweils direkt an den Bus 40 angeschlossen, auch wenn dies in Fig. 1 nicht dargestellt ist.

Die Kommunikationssteuereinrichtung 11 dient zur Steuerung einer Kommunikation der jeweiligen Teilnehmerstation 10, 20, 30 über den Bus 40 mit einer anderen Teilnehmerstation der an den Bus 40 angeschlossenen Teilnehmerstationen 10, 20, 30. Die Sende-/Empfangseinrichtung 12 dient zum Senden der Nachrichten 45, 47 in Form von Signalen und zur Reduzierung von leitungsgebundenen Emissionen im Bussystem 1, um die Emissionsgrenzen bei CAN-FD-Bitraten einzuhalten, wie später noch ausführlicher beschrieben. Leitungsgebundene Emissionen können auf dem Bus 40 auftreten. Die Kommunikationssteuereinrichtung 11 kann wie ein herkömmlicher CAN-Controller ausgeführt sein. Die Sende-/Empfangseinrichtung 13 kann wie ein herkömmlicher CAN-Transceiver ausgeführt sein.

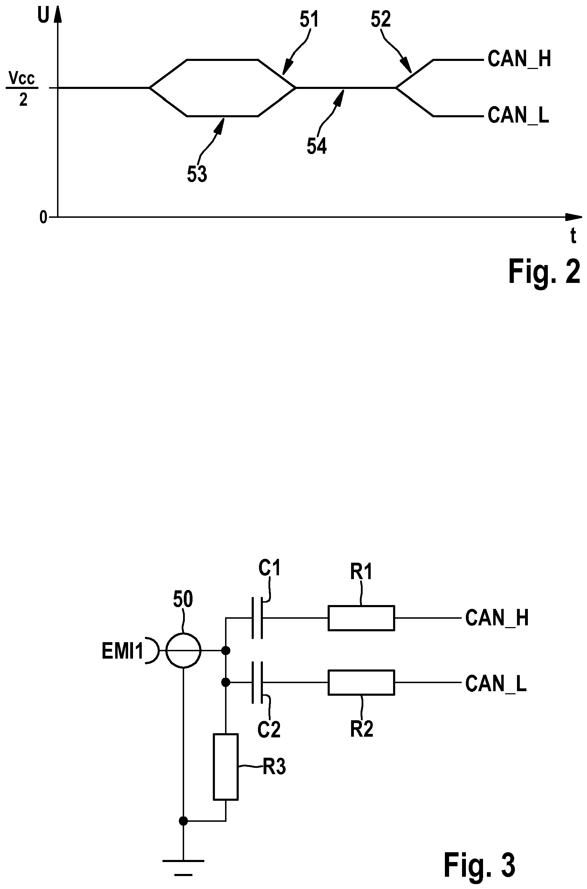

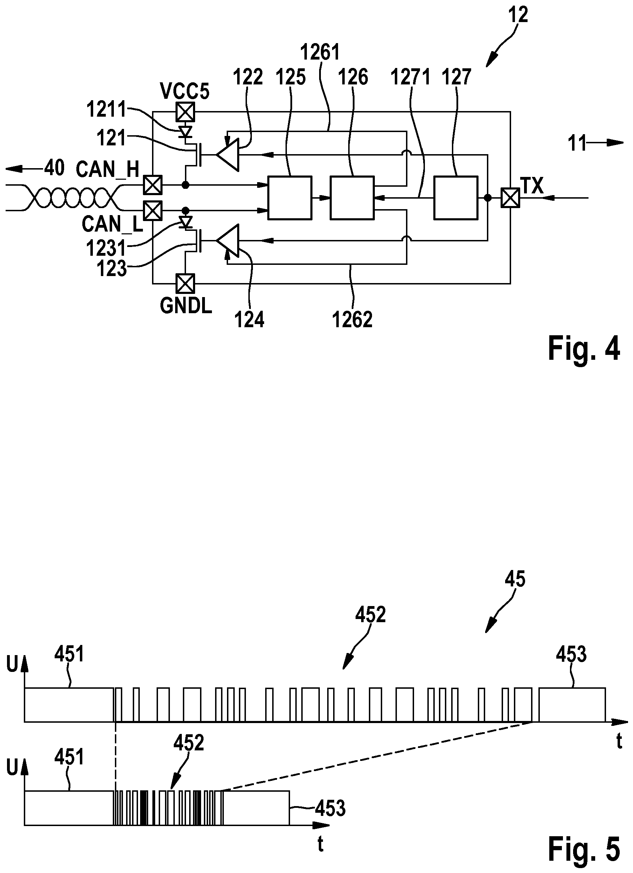

Fig. 2 zeigt einen Spannungsverlauf U über der Zeit t mit Schaltflanken 51, 52, wie er von der Sende-/Empfangseinrichtung 12 erzeugt wird, die in Fig. 4 genauer dargestellt ist. Die Schaltflanke 51 entspricht einem Übergang des Signals vom dominanten Zustand 53 zum rezessiven Zustand 54. Die Schaltflanke 52 entspricht einem Übergang des Signals vom rezessiven Zustand 54 zum dominanten Zustand 53. Der dargestellte Spannungsverlauf hat Schaltflanken 51, 52, wie ein von der Sende-/Empfangseinrichtung 12 zu erzeugender Sollspannungsverlauf. Der dominante Zustand 53 entspricht einem Dominant-Buszustand. Der rezessive Zustand 54 entspricht einem Rezessiv-Buszustand.

Fig. 3 zeigt ein Auskoppelnetzwerk an den beiden Busadern für CAN_H und CAN_L des Busses 40. Das Auskoppelnetzwerk findet zur Messung der leitungsgebundenen Emission von CAN-Transceivern bzw. der Sende-/Empfangseinrichtungen 12 und der Sende-/Empfangseinrichtung 13 Verwendung. Bei dem Auskoppelnetzwerk ist eine Reihenschaltung aus einer ersten Kapazität C1 und einem ersten Widerstand R1 der Busader CAN_H zugeordnet und eine Reihenschaltung aus einer zweiten Kapazität C2 und einem zweiten Widerstand R2 ist der Busader CAN_L zugeordnet. Die erste und zweite Kapazität C1, C2 sind jeweils an einer ihrer Seiten mit einem dritten Widerstand R3 und einer Messeinrichtung 50 zur Auskopplung eines Emissionsgrenzwerts EMI1 verbunden. Der Widerstand R3 ist an seinem anderen Ende geerdet.

Die leitungsgebundene Emission von CAN-Transceivern bzw. der Sende-/Empfangseinrichtung 13 und der Sende-/Empfangseinrichtungen 12 wird entsprechend der 150 Ohm-Methode (IEC 61967-4, Integrated circuits, Measurement of electromagnetic emissions, 150 kHz to 1 GHz - Part 4: Measurement of conducted emissions - 1/150 direct coupling method) und gemäß IEC 62228 (EMC evaluation of CAN Transceivers = EMC-Bewertung von CAN-Transceivern) gemessen. Bei der Emissionsmessung mit dem Auskoppelnetzwerk von Fig. 3 wird ein heruntergeteiltes AC-Signal, das ein Wechselspannungssignal ist, der beiden Busadern CAN_H und CAN_L bewertet. An der Messeinrichtung 50 wird zusätzlich zu dem dritten Widerstand R3 nochmal mit 50 Ohm Innenwiderstand gemessen.

Die Einflussgrößen zur Emission sind:
- Abstimmen (Matching) der beiden Sendestufen für CAN_H, CAN_L bezüglich Treiberstrom und Innenwiderstand,
- Ansteuertiming zwischen den beiden Sendestufen, und
- Strom-Spannungskennlinie (I-U-Kennlinie) der beiden Sendestufen.

Die Sende-/Empfangseinrichtung 13 der Teilnehmerstation 20 beherrscht die Einflussgrößen zur Emission so, dass die Grenzwerte für derzeitige Anforderungen an CAN-HS, also bis zu 500 KBit pro Sekunde (500 kbps) erreicht werden.

Fig. 4 zeigt demgegenüber den Aufbau der Sende-/Empfangseinrichtung 12 der Teilnehmerstationen 10, 30 genauer. Demzufolge ist die Sende-/Empfangseinrichtung 12 auf ihrer einen Seite an den Bus 40 und auf ihrer anderen Seite zur Kommunikationssteuereinrichtung 11angeschlossen. Somit kann die Sende-/Empfangseinrichtung 12 ein Sendesignal TX von der Kommunikationssteuereinrichtung 11 empfangen und auf den Bus 40 einkoppeln.

In Fig. 4 hat die Sende-/Empfangseinrichtung 12 einen Pfad für das Signal CAN_H für die Busader 41, in welchem Pfad ein erster Transistor 121und ein erster Treiber(DRV) 122 angeordnet sind, und einen Pfad für das Signal CAN_L für die Busader 42, in welchem Pfad ein zweiter Transistor 123 und ein zweiter Treiber (DRV) 124 angeordnet sind. Der erste Transistor 121 ist über eine Diode 1211 mit der Spannung VCC5 verbunden, die in Fig. 2 veranschaulicht ist. Der zweite Transistor 123 ist über eine Diode 1231 mit einem Anschluss für das Signal CAN_L verbunden. Zudem ist der zweite Transistor 123 mit Masse GNDL verbunden, also geerdet. Die beiden Signale CAN_H und CAN_L werden einer Spannungssymmetrie-Messeinrichtung 125 und anschließend einer Emissionssteuereinrichtung 126 zugeführt. Die Emissionssteuereinrichtung 126 wird von einer Erfassungseinrichtung 127 über eine Verbindung 1271 ein- oder ausgeschaltet. Ist die Emissionssteuereinrichtung 126 eingeschaltet und damit in Betrieb, kann sie über eine Verbindung 1261 ein Signal zur Einstellung von Einflussgrößen der Emission im Pfad CAN_H an den ersten Treiber (DRV) 122 ausgeben. Zudem kann sie über eine Verbindung 1262 ein Signal zur Einstellung von Einflussgrößen der Emission im Pfad CAN_L an den zweiten Treiber (DRV) 124 ausgeben.

Die Spannungssymmetrie-Messeinrichtung 125 misst das AC-Summensignal von CAN_H und CAN_L. Die Erfassungseinrichtung 127 erfasst und bestimmt eine für die Steuerung mit der Emissionssteuereinrichtung 126 geeignete Phase während der CAN-Kommunikation.

Wie in Fig. 5 anhand der Nachricht 45 für einen CAN-Rahmen oben in Fig. 5 und einen CAN-FD-Rahmen unten in Fig. 5 jeweils als Spannung U über der Zeit t gezeigt, kann die CAN-Kommunikation auf dem Bus 40 grundlegend in zwei unterschiedliche Phasen unterteilt werden, nämlich die nur schematisch dargestellten Arbitrierungsphasen 451, 453 und einen Datenbereich 452, der bei CAN-HS auch Datenfeld bzw. bei CAN-FD auch Datenphase genannt wird. Bei CAN-FD wird im Vergleich zum klassischen CAN am Ende der Arbitrierungsphase die Bitrate für die folgende Datenphase auf z. B. 2, 4, 8Mbps erhöht. Damit gilt, dass bei CAN-FD die Bitrate in den Arbitrierungsphasen 451, 453 kleiner als die Bitrate im Datenbereich 452 ist. Bei CAN-FD ist der Datenbereich 452 gegenüber dem Datenbereich 452 des CAN-Rahmens deutlich verkürzt. Dennoch ermöglicht CAN-FD trotz kürzerer Datenphase eine Übertragung von mehr Daten als bei CAN-HS.

Geeignete Phasen oder Bereiche für eine Steuerung mit der Emissionssteuereinrichtung 126 sind immer dann, wenn sichergestellt ist, dass die Teilnehmerstation 10, 30 selbst sendet und keine andere Teilnehmerstation des Bussystems 1 sendet. Dies ist bei CAN und CAN-FD der Fall in dem Datenbereich 452 in Fig. 5.

Die Erkennung des Endes der Arbitrierungsphase 451, 453 oder des Datenbereichs 452 mit der Erfassungseinrichtung 127 erfolgt bei dem vorliegenden Ausführungsbeispiel über ein BRS-Bit, das am Ende der Arbitrierungsphasen 451, 453 vorhanden ist. Hierbei ist die Sende-/Empfangseinrichtung 12 in der Lage, das im Datenbereich 452 verwendete Datenübertragungsprotokoll zu dekodieren. Somit ist die Sende-/Empfangseinrichtung 12 ein Transceiver für den Teilnetz-Betrieb (Partial-Networking-Transceiver).

Hat die Erfassungseinrichtung 127 den Datenbereich 452 erfasst, aktiviert sie über die Verbindung 1271 die Emissionssteuereinrichtung 126, so dass eine Emissionssteuerung und insbesondere eine Emissionsregelung durchgeführt wird. Die Emissionssteuereinrichtung 126 kann hierzu verschiedene Größen erfassen. Beispielsweise kann die Emissionssteuereinrichtung 126 ein Maß für den Emissionsgrenzwert EMI1 erfassen, welches an CAN_H und CAN_L transceiver-intern, also in der Sende-/Empfangseinrichtung 12, abgegriffen werden kann. Die Emissionssteuereinrichtung 126 kann auch Treiberströme an CAN_H und CAN_L während von der Sende-/Empfangseinrichtung 12 selbst gesendeter Dominantphasen erfassen.

Die Emissionssteuerung durch die Emissionssteuereinrichtung 126 beginnt bei Erkennung des Datenbereichs 452 und stellt die Einflussgrößen für die Sendestufen von CAN_H und CAN_L so ein, dass die leitungsgebundenen Emissionen minimiert werden. Am Ende des Datenbereichs 452 endet die Emissionssteuerung durch die Emissionssteuereinrichtung 126. Dabei werden die verwendeten Einstellungen gespeichert und bleiben solange erhalten, bis die Erfassungseinrichtung 127 den nächsten Datenbereich 452 oder das Ende einer Arbitrierungsphase 451, 453 erfasst und somit erkennt. Damit kann die Emissionssteuereinrichtung 126 abhängig von der Arbitrierungsphase 451; 453 und des Datenbereichs 452 der Nachricht 45 oder der Nachrichten 46; 47 ein- oder ausgeschaltet werden.

Die Teilnehmerstation 30 arbeitet auf die gleiche Weise wie die Teilnehmerstation 10.

Die Sende-/Empfangseinrichtung 12 gemäß dem vorliegenden Ausführungsbeispiel ist besonders kostengünstig realisierbar, wenn ein in die Sende-/Empfangseinrichtung 12 integrierter Protokoll-Controller für die Partial-Network-Funktion vorhanden ist und zum Erkennen von u. a. des BRS-Bits am Ende der Arbitrierung verwendbar ist. Hierbei sollte der Protokoll-Controller von einem ausreichend genauen Takt betrieben werden.

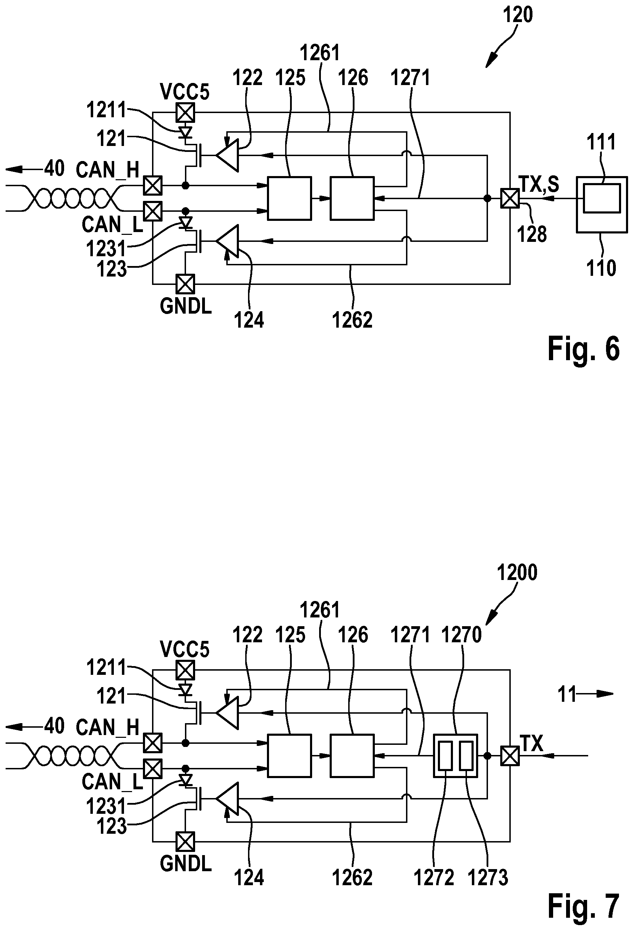

Fig. 6 zeigt eine Kommunikationssteuereinrichtung 110 und eine Sende-/Empfangseinrichtung 120 gemäß einem zweiten Ausführungsbeispiel. Bei der Sende-/Empfangseinrichtung 120 erfolgt die Erkennung des Datenbereichs 452 mit einer Datenfeld-Erfassungseinrichtung 111 der Kontrollsteuereinrichtung 110. Die Datenfeld-Erfassungseinrichtung 111 kann von dem CAN-Modul der Kommunikationssteuereinrichtung 110 implementiert sein. Die Kommunikationssteuereinrichtung 110 gibt das Ergebnis der Erkennung mit Hilfe eines Schaltsignals S von der Erfassungseinrichtung 111 über einen Anschluss 128 an die Sende-/Empfangseinrichtung 120 aus. Das Schaltsignal S signalisiert den Datenbereich 452. In diesem Fall haben die Sende-/Empfangseinrichtung 120 und die Kommunikationssteuereinrichtung 110 jeweils einen zusätzlichen Pin für den Anschluss 128.

Ansonsten ist das Bussystem gemäß dem vorliegenden Ausführungsbeispiel auf die gleiche Weise aufgebaut wie das Bussystem 1 gemäß dem ersten Ausführungsbeispiel.

Bei der Sende-/Empfangseinrichtung 120 gemäß dem vorliegenden Ausführungsbeispiel sind somit nur zwei zusätzliche Pins für den Anschluss 128 erforderlich. Dies ist kostengünstiger als die Lösung gemäß dem ersten Ausführungsbeispiel, bei welcher ein in die Sende-/Empfangseinrichtung 12 integrierter Protokoll-Controller erforderlich ist, welcher u. a. das BRS-Bit am Ende der Arbitrierung erkennt und von einem ausreichend genauen Takt betrieben werden sollte.

Fig. 7 zeigt eine Sende-/Empfangseinrichtung 1200 gemäß einem dritten Ausführungsbeispiel. Bei der Sende-/Empfangseinrichtung 1200 erfolgt die Erkennung des Datenbereichs 452 mit einer Erfassungseinrichtung 1270 durch eine Überwachung des Sendesignals TX. Somit wird der Eingang des Sendesignals TX der Sende-/Empfangseinrichtung 1200 bewertet, um damit den Datenbereich 452 zu erkennen. Genauer gesagt werden, um den Datenbereich 452 zu erfassen und damit zu erkennen, die fallenden Flanken des an der Sende-/Empfangseinrichtung 1200 von der Kommunikationssteuereinrichtung 11 ankommenden Sendesignals TX beobachtet. Die Erfassungseinrichtung 1270 beurteilt anhand der gezählten fallenden Flanken des Sendesignals TX, ob die Sende-/Empfangseinrichtung 1200 als Sender in dem Datenbereich 452 agiert. Demzufolge umfasst die Datenfeld-Erfassungseinrichtung 1270 einen Zähler 1272, der insbesondere als 5-Bit-Zähler ausgestaltet ist. Die fallenden Flanken des Sendesignals TX dienen als Takteingang der Erfassungseinrichtung 1270 bzw. des Zählers 1272. Alternativ kann der Zähler 1272 auch die steigenden Flanken des Sendesignals TX zählen.

Hierbei wird genutzt, dass in den Arbitrierungsphasen 451, 453 maximal 35 Bits ohne Stopfbit(s) (stuff condition) gesendet werden, d. h. es treten max. 17 fallende Flanken auf. Die können z. B. durch Verwendung eines 5-Bit-Zählers erfasst werden. Das Rücksetzen des Zählers 1272 erfolgt über ein Zeitglied 1273. Die Bitrate der Arbitrierungsphasen 451,453 wird der Erfassungseinrichtung 1270 übermittelt. Das Zeitglied 1273 beträgt typischerweise 8 Bits. Das Zeitglied 1273 kann jedoch auch mindestens 6 und maximal 11 Bits betragen. Die Wahl des Zeitglieds 1273 richtet sich nach dem jeweils verwendeten Datenübertragungsprotokoll des Bussystems.

Ansonsten ist das Bussystem gemäß dem vorliegenden Ausführungsbeispiel auf die gleiche Weise aufgebaut wie das Bussystem 1 gemäß dem ersten Ausführungsbeispiel.

Die Sende-/Empfangseinrichtung 1200 gemäß dem vorliegenden Ausführungsbeispiel ist sowohl für CAN-HS als auch für CAN-FD anwendbar. Mit der Sende-/Empfangseinrichtung 1200 wird der Datenbereich 452 ohne zusätzliche Pins an der Sende-/Empfangseinrichtung 1200 und der Kommunikationssteuereinrichtung 11 erkannt. Außerdem ist kein zusätzlicher Protokoll-Controller wie bei dem ersten Ausführungsbeispiel erforderlich.

Mit der Sende-/Empfangseinrichtung 1200 kann eine Reduzierung der leitungsgebundenen Emission für jeden Anwendungsfall erzielt werden.

Alle zuvor beschriebenen Ausgestaltungen des Bussystems 1 der Teilnehmerstationen 10, 20,30 und des Verfahrens gemäß dem ersten bis dritten Ausführungsbeispiel können einzeln oder in allen möglichen Kombinationen Verwendung finden. Zusätzlich sind insbesondere folgende Modifikationen denkbar.

Das zuvor beschriebene Bussystem 1 gemäß dem ersten bis dritten Ausführungsbeispiel ist anhand eines auf dem CAN-Protokoll basierenden Bussystems beschrieben. Das Bussystem 1 gemäß dem ersten bis dritten Ausführungsbeispiel kann jedoch auch eine andere Art von Kommunikationsnetz sein. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30 auf den Bus 40 oder einen gemeinsamen Kanal des Busses 40 gewährleistet ist.

Das Bussystem 1 gemäß dem ersten bis dritten Ausführungsbeispiel ist insbesondere ein CAN-Netzwerk oder ein CAN FD-Netzwerk oder, in Bezug auf die von der Emissionssteuereinrichtung 126 durchgeführte Emissionssteuerung und insbesondere Emissionsregelung, ein FlexRay-Netzwerk.

Die Anzahl und Anordnung der Teilnehmerstationen 10, 20, 30 in den Bussystemen 1 gemäß dem ersten bis dritten Ausführungsbeispiel ist beliebig. Insbesondere können auch nur Teilnehmerstationen 10 oder Teilnehmerstationen 30 in den Bussystemen 1 des ersten bis dritten Ausführungsbeispiels vorhanden sein.

Um eine noch höhere Datenrate zu erzielen, kann innerhalb des CAN-Rahmens der Nachrichten 45, 46, 47 die Datenübertragung analog zu Datenübertragungsprotokollen erfolgen, wie beispielsweise Ethernet, usw.

Die Funktionalität der zuvor beschriebenen Ausführungsbeispiele lässt sich in einem Transceiver bzw. einer Sende-/Empfangseinrichtung 12 bzw. Transceiver oder einem CAN-Transceiver oder einem Transceiver-Chipsatz oder einem CAN-Transceiver-Chipsatz oder auch in einer Kommunikationssteuereinrichtung 11, usw. umsetzen. Zusätzlich oder alternativ kann es in existierende Produkte integriert werden. Insbesondere ist es möglich, dass die betrachtete Funktionalität entweder im Transceiver als separater elektronischer Baustein (Chip) realisiert oder in einer integrierten Gesamtlösung, bei welchem nur ein elektronischer Baustein (Chip) vorhanden ist, eingebettet ist.

## Patentansprüche

1. Teilnehmerstation (10; 30) für ein Bussystem (1), mit einer Sende-/Empfangseinrichtung (12; 120; 1200) zum Senden oder Empfangen einer Nachricht (45; 46; 47) von mindestens einer weiteren Teilnehmerstation des Bussystems (1) über das Bussystem (1), bei welchem Bussystem (1) zumindest zeitweise ein exklusiver, kollisionsfreier Zugriff einer Teilnehmerstation (10, 20, 30) auf einen Bus (40) des Bussystems (1) gewährleistet ist,
wobei die Sende-/Empfangseinrichtung (12; 120; 1200) eine Emissionssteuereinrichtung (126) zur Steuerung der Eigenschaften der Sende-/Empfangseinrichtung (12; 120; 1200) zur Reduktion von leitungsgebundenen Emissionen in dem Bussystem (1) aufweist,
**dadurch gekennzeichnet, dass** die Sende-/Empfangseinrichtung (12; 120; 1200) zudem zum Ein- oder Ausschalten der Emissionssteuereinrichtung (126) abhängig von der Arbitrierungsphase (451; 453) und des Datenbereichs (452) der Nachricht (45; 46; 47) ausgestaltet ist.

2. Teilnehmerstation (10; 30) nach Anspruch 1, zudem mit einer Kommunikationssteuereinrichtung (11; 110) zur Steuerung der Kommunikation im Bussystem (1), wobei die Kommunikationssteuereinrichtung (110) oder die Sende-/Empfangseinrichtung (12; 1200) eine Erfassungseinrichtung (111; 127; 1270) zur Erfassung eines Datenbereichs (452) aufweist.

3. Teilnehmerstation (10; 30) nach Anspruch 2, wobei die Sende-/Empfangseinrichtung (12) eine Erfassungseinrichtung (127) aufweist, die derart ausgestaltet ist, dass sie den Datenbereich (452) aufgrund eines Erfassens eines BRS-Bits am Ende einer Arbitrierungsphase (451; 453) erkennt.

4. Teilnehmerstation (10; 30) nach Anspruch 2, wobei die Sende-/Empfangseinrichtung (12) ausgestaltet ist, den Datenbereich (452) aufgrund eines Schaltsignals (S) von der Kommunikationssteuereinrichtung (110) zu erkennen.

5. Teilnehmerstation (10; 30) nach Anspruch 2 oder 4, wobei die Kommunikationssteuereinrichtung (110) eine Erfassungseinrichtung (111) aufweist, die derart ausgestaltet ist, dass sie nach Erkennen des Datenbereichs (452) ein Schaltsignal (S) über einen Anschluss (128) an die Sende-/Empfangseinrichtung (120) ausgibt.

6. Teilnehmerstation (10; 30) nach Anspruch 2, wobei die Sende-/Empfangseinrichtung (120) eine Erfassungseinrichtung (1270) aufweist, die derart ausgestaltet ist, dass sie den Datenbereich (452) aufgrund einer Überwachung eines Sendesignals (TX) erkennt.

7. Teilnehmerstation (10; 30) nach Anspruch 6, wobei die Erfassungseinrichtung (1270) einen Zähler (1272) zum Zählen von fallenden oder steigenden Flanken des Sendesignals (TX) aufweist.

8. Teilnehmerstation (10; 30) nach Anspruch 7, wobei die Erfassungseinrichtung (1270) zudem ein Zeitglied (1273) zum Zurücksetzen des Zählers (1272) aufweist.

9. Bussystem (1), mit
einem Bus (40), und
mindestens zwei Teilnehmerstationen (10; 20; 30), welche über den Bus (4) derart miteinander verbunden sind, dass sie miteinander kommunizieren können,
wobei mindestens eine der mindestens zwei Teilnehmerstationen (10; 20; 30) eine Teilnehmerstation (10; 30) nach einem der vorangehenden Ansprüche ist.

10. Verfahren zur Reduktion von leitungsgebundenen Emissionen in einem Bussystem (1), mit den Schritten
Senden, mit einer Sende-/Empfangseinrichtung (12; 120; 1200), einer Nachricht (45; 46; 47) von mindestens einer weiteren Teilnehmerstation des Bussystems (1) über das Bussystem (1), bei welchem Bussystem (1) zumindest zeitweise ein exklusiver, kollisionsfreier Zugriff einer Teilnehmerstation (10, 20, 30) auf einen Bus (40) des Bussystems (1) gewährleistet ist,
Steuern der Eigenschaften der Sende-/Empfangseinrichtung (12; 120; 1200) mit einer Emissionssteuereinrichtung (126) der Sende-/Empfangseinrichtung (12; 120; 1200), um leitungsgebundene Emission des Bussystems (1) zu reduzieren,
**gekennzeichnet durch** den weiteren Schritt
Ein- oder Ausschalten der Emissionssteuereinrichtung (126) abhängig von der Arbitrierungsphase (451; 453) und des Datenbereichs (452) der Nachricht (45; 46; 47).

## Claims

1. Subscriber station (10; 30) for a bus system (1), having
a transmitting/receiving device (12; 120; 1200) for transmitting or receiving a message (45; 46; 47) from at least one further subscriber station of the bus system (1) via the bus system (1), in which bus system (1) exclusive collision-free access to a bus (40) of the bus system (1) by a subscriber station (10, 20, 30) is at least occasionally ensured,
the transmitting/receiving device (12; 120; 1200) having an emission control device (126) for controlling the properties of the transmitting/receiving device (12; 120; 1200) for reducing line-conducted emissions in the bus system (1),
**characterized in that** the transmitting/receiving device (12; 120; 1200) is also configured to switch the emission control device (126) on or off depending on the arbitration phase (451; 453) and the data area (452) of the message (45; 46; 47).

2. Subscriber station (10; 30) according to Claim 1, also having a communication control device (11; 110) for controlling the communication in the bus system (1), the communication control device (110) or the transmitting/receiving device (12; 1200) having a detection device (111; 127; 1270) for detecting a data area (452).

3. Subscriber station (10; 30) according to Claim 2, the transmitting/receiving device (12) having a detection device (127) which is configured in such a manner that it identifies the data area (452) on the basis of a BRS bit being detected at the end of an arbitration phase (451; 453).

4. Subscriber station (10; 30) according to Claim 2, the transmitting/receiving device (12) being configured to identify the data area (452) on the basis of a switching signal (S) from the communication control device (110).

5. Subscriber station (10; 30) according to Claim 2 or 4, the communication control device (110) having a detection device (111) which is configured in such a manner that it outputs a switching signal (S) to the transmitting/receiving device (120) via a connection (128) after the data area (452) has been identified.

6. Subscriber station (10; 30) according to Claim 2, the transmitting/receiving device (120) having a detection device (1270) which is configured in such a manner that it identifies the data area (452) on the basis of monitoring of a transmission signal (TX).

7. Subscriber station (10; 30) according to Claim 6, the detection device (1270) having a counter (1272) for counting rising or falling edges of the transmission signal (TX).

8. Subscriber station (10; 30) according to Claim 7, the detection device (1270) also having a timer (1273) for resetting the counter (1272).

9. Bus system (1) having
a bus (40), and
at least two subscriber stations (10; 20; 30) which are connected to one another via the bus (4) in such a manner that they can communicate with one another,
at least one of the at least two subscriber stations (10; 20; 30) being a subscriber station (10; 30) according to one of the preceding claims.

10. Method for reducing line-conducted emissions in a bus system (1), having the steps of transmitting, using a transmitting/receiving device (12; 120; 1200), a message (45; 46; 47) from at least one further subscriber station of the bus system (1) via the bus system (1), in which bus system (1) exclusive collision-free access to a bus (40) of the bus system (1) by a subscriber station (10, 20, 30) is at least occasionally ensured,
controlling the properties of the transmitting/receiving device (12; 120; 1200) using an emission control device (126) of the transmitting/receiving device (12; 120; 1200) in order to reduce line-conducted emission of the bus system (1),
**characterized by** the further step of switching the emission control device (126) on or off depending on the arbitration phase (451; 453) and the data area (452) of the message (45; 46; 47).

## Revendications

1. Station d'abonné (10 ; 30) pour un système de bus (1), comprenant
un dispositif émetteur/récepteur (12 ; 120 ; 1200) destiné à émettre ou à recevoir un message (45 ; 46 ; 47) de la part d'au moins une autre station d'abonné du système de bus (1) par le biais du système de bus (1), système de bus (1) avec lequel un accès exclusif exempt de collision d'une station d'abonné (10, 20, 30) sur un bus (40) du système de bus (1) est garanti au moins temporairement,
le dispositif émetteur/récepteur (12; 120 ; 1200) possédant un dispositif de commande d'émission (126) destiné à commander les propriétés du dispositif émetteur/récepteur (12 ; 120 ; 1200) en vue de réduire les émissions liées à la ligne dans le système de bus (1),
**caractérisée en ce que** le dispositif émetteur/récepteur (12 ; 120 ; 1200) est en outre configuré pour mettre en marche ou arrêter le dispositif de commande d'émission (126) en fonction de la phase d'arbitrage (451 ; 453) et de la zone de données (452) du message (45 ; 46 ; 47).

2. Station d'abonné (10 ; 30) selon la revendication 1, comprenant en outre un dispositif de commande de communication (11 ; 110) destiné à commander la communication dans le système de bus (1), le dispositif de commande de communication (110) ou le dispositif émetteur/récepteur (12 ; 1200) possédant un dispositif de détection (111 ; 127 ; 1270) destiné à détecter une zone de données (452).

3. Station d'abonné (10 ; 30) selon la revendication 2, le dispositif émetteur/récepteur (12) possédant un dispositif de détection (127) qui est configuré de telle sorte qu'il reconnaît une la zone de données (452) sur la base d'une détection d'un bit BRS à la fin d'une phase d'arbitrage (451 ; 453).

4. Station d'abonné (10 ; 30) selon la revendication 2, le dispositif émetteur/récepteur (12) étant configuré pour reconnaître la zone de données (452) sur la base d'un signal de commutation (S) du dispositif de commande de communication (110).

5. Station d'abonné (10 ; 30) selon la revendication 2 ou 4, le dispositif de commande de communication (110) possédant un dispositif de détection (111) qui est configuré de telle sorte qu'après la détection de la zone de données (452), il délivre un signal de commutation (S) par le biais d'une borne (128) au dispositif émetteur/récepteur (120).

6. Station d'abonné (10 ; 30) selon la revendication 2, le dispositif émetteur/récepteur (120) possédant un dispositif de détection (1270) qui est configuré de telle sorte qu'il reconnaît la zone de données (452) sur la base d'une surveillance d'un signal émis (TX).

7. Station d'abonné (10 ; 30) selon la revendication 6, le dispositif de détection (1270) possédant un compteur (1272) destiné à compter les fronts descendants ou montants du signal émis (TX).

8. Station d'abonné (10 ; 30) selon la revendication 7, le dispositif de détection (1270) possédant en outre un temporisateur (1273) destiné à remettre le compteur (1272) à zéro.

9. Système de bus (1), comprenant
un bus (40) et
au moins deux stations d'abonné (10 ; 20 ; 30) qui sont reliées entre elles par le biais du bus (4) de telle sorte qu'elles peuvent communiquer entre elles,
au moins l'une des au moins deux stations d'abonné (10, 20, 30) étant une station d'abonné (10 ; 30) selon l'une des revendications précédentes.

10. Procédé de réduction des émissions liées à la ligne dans un système de bus (1), comprenant les étapes suivantes
émission, avec un dispositif émetteur/récepteur (12; 120 ; 1200), d'un message (45 ; 46 ; 47) depuis au moins une autre station d'abonné du système de bus (1) par le biais du système de bus (1), système de bus (1) avec lequel un accès exclusif exempt de collision d'une station d'abonné (10, 20, 30) sur un bus (40) du système de bus (1) est garanti au moins temporairement, commande des propriétés du dispositif émetteur/récepteur (12 ; 120 ; 1200) avec un dispositif de commande d'émission (126) du dispositif émetteur/récepteur (12 ; 120 ; 1200) afin de réduire les émissions liées à la ligne du système de bus (1), **caractérisé par** l'étape supplémentaire suivante mise en marche ou arrêt du dispositif de commande d'émission (126) en fonction de la phase d'arbitrage (451 ; 453) et de la zone de données (452) du message (45 ; 46 ; 47).
